# EUROPÄISCHE PATENTSCHRIFT

(11) **EP 2 067 557 B1**
(45) Veröffentlichungstag und Bekanntmachung des Hinweises auf die Patenterteilung: **05.03.2014**
(21) Anmeldenummer: 08020494.4
(22) Anmeldetag: 26.11.2008
(51) Int. Cl.: B23D 51/10, B23D 61/12

(54) **Motorisch antreibbare Säge mit Sägeblatthalterung und auswechselbarem Sägeblatt, sowie Sägeblatt**
Motor driven saw with saw blade holder and an exchangeable saw blade, as well as the saw blade itself
Scie pouvant être entraînée de manière motorisée dotée d'une fixation de lame de scie et une lame de scie échangeable, ainsi que lame de scie

(30) Priorität: 06.12.2007 DE 102007060501
(43) Veröffentlichungstag der Anmeldung: 10.06.2009
(73) Patentinhaber: SCHMID & WEZEL GmbH & Co., 75433 Maulbronn (DE)
(72) Erfinder: Kaiser, Dieter, 77948 Friesenheim (DE); Baumann, Marco, 78247 Hilzingen (DE)
(74) Vertreter: DREISS Patentanwälte PartG mbB

(56) Entgegenhaltungen:
- EP-A2- 1 010 489
- US-A- 2 747 631
- US-A- 3 056 437
- US-A- 3 851 986
- US-A- 3 901 117

## Beschreibung

Die Erfindung betrifft eine motorisch antreibbare Säge nach dem Oberbegriff des Anspruchs 1. Eine solche Säge ist jeweils aus der US 3,901,117 bekannt.

Aus der US 4,294,013 ist insbesondere ein Formschluss zwischen einem Sägeblatt und einer Sägeblatthalterung bekannt. Bei anderen bekannten Sägen, beispielsweise bei der aus der DE 198 50 689 bekannten Säge wird das Sägeblatt ausschließlich durch eine Klemmung, also durch einen Kraftschluss, in der Sägeblatthalterung befestigt. Daher kann es bei nicht ausreichendem Anziehen der Befestigungsschraube oder einem durch Vibrationen bedingten Lösen der Befestigungsschraube passieren, dass das Sägeblatt nach vorne herausfällt oder sogar regelrecht herausschießt. Daraus ergibt sich eine Verletzungsgefahr.

Durch einen Formschluss wird diese Gefahr verringert. Beim Gegenstand der US 4,294,013 wird der Formschluss durch zwei separate Nasen im Halter und zwei dazu passende Öffnungen im Sägeblatt erreicht. Als Nachteil ergibt sich bei dieser Lösung, dass das Sägeblatt seitlich versetzt zur Hubrichtung eingesetzt werden muss, um die Nasen in die Öffnungen einführen zu können. Die Sägeblatthalterung muss sich entsprechend weit öffnen lassen.

Nach der Fig. 3 der US 4,294,013 wird ein zweiteiliger Halter verwendet, der durch lösbare Schraubverbindungen zusammengehalten wird. Zum Öffnen des Halters müssen Muttern der Schraubverbindungen ganz abgenommen werden, was beim Sägeblattwechsel umständlich ist und damit einem anzustrebenden einfachen Sägeblattwechsel widerspricht.

Nachteilig ist auch, dass eine unbeabsichtigte Lockerung der Schraubverbindungen im Betrieb der Säge wieder zu der eingangs genannten Verletzungsgefahr durch ein herausschießendes Sägeblatt führt.

Vor diesem Hintergrund besteht die Aufgabe der Erfindung in der Angabe einer Säge und eines Sägeblatts, mit denen jeweils ein besonders einfaches Auswechseln des Sägeblatts möglich ist, die eine verbesserte Sicherung des Sägeblatts gegen ein Herausrutschen aus der Sägeblatthalterung in Folge einer Lockerung seiner Befestigung aufweisen, und die darüber hinaus eine präzise definierte Lage und spielfreie Halterung des Sägeblatts in der Sägeblatthalterung gewährleisten.

Diese Aufgabe wird in ihren die Säge betreffenden Aspekten durch die Merkmale des Anspruchs 1 gelöst.

Die Erfindung betrifft ferner verschiedene vorteilhafte Weiterbildungen.

Ausführungsbeispiele der Erfindung und ihrer vorteilhaften Weiterbildungen werden im folgenden anhand der beigefügten Zeichnungen näher beschrieben. Es stellen dar:
- Figur 1: ein Ausführungsbeispiel in Explosionsdarstellung;
- Figur 2: das Einsetzen des Sägeblattes in die Sägeblatthalterung;
- Figur 3: das Ausführungsbeispiel im Betriebszustand;
- Figur 4: eine Ansicht in Richtung IV-IV der Pfeile in Figur 3;
- Figur 5: einen Schnitt in Richtung V-V in Figur 4.

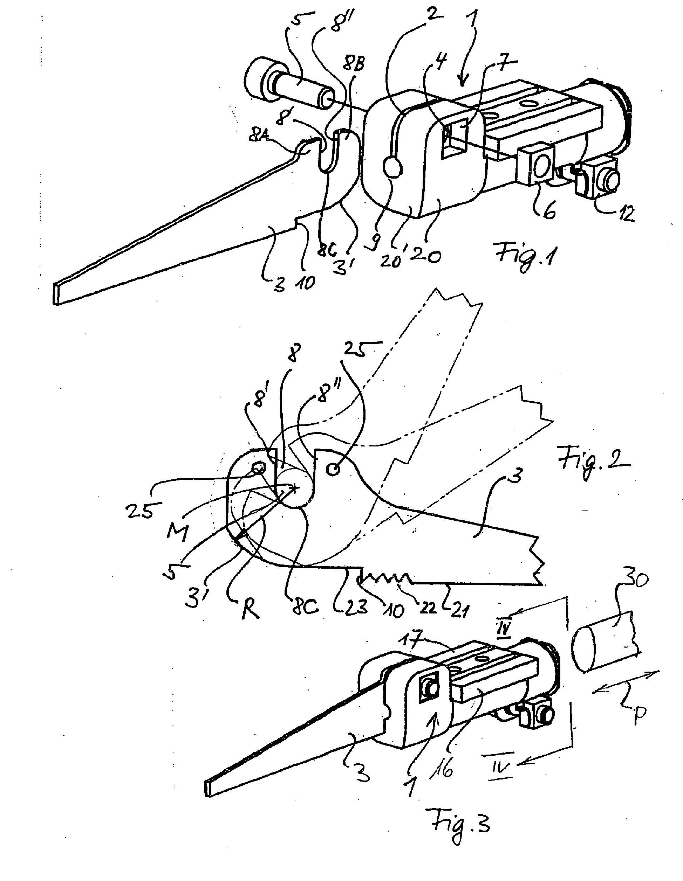

Im Einzelnen zeigt die Fig. 1 eine Sägeblatthalterung 1 und ein Sägeblatt 3. Das vordere Ende 20 der Sägeblatthalterung 1 weist einen Schlitz 2 auf, der zur Aufnahme des Sägeblattes 3 dient. Die beiden durch den Schlitz 2 entstandenen Hälften des vorderen Endes 20 der Sägeblatthalterung 1 weisen Öffnungen 4 auf, von denen nur die vordere zu sehen ist. Durch diese Öffnungen 4 wird die Schraube 5 gesteckt, deren Ende mit einem Außengewinde versehen ist, das mit einer Schraubenmutter 6 zusammenwirkt. Beim Anziehen der Schraube 5 werden die beiden Hälften des vorderen Endes 20 der Sägeblatthalterung 1 so zusammengezogen, dass das in den Schlitz 2 eingesetzte hintere Ende des Sägeblattes 3 dazwischen großflächig festgeklemmt wird. Beim Festschrauben der Schraube 5 wird die Schraubenmutter 6 gegen ein Mitdrehen durch die rechteckige Ausnehmung 7 festgehalten.

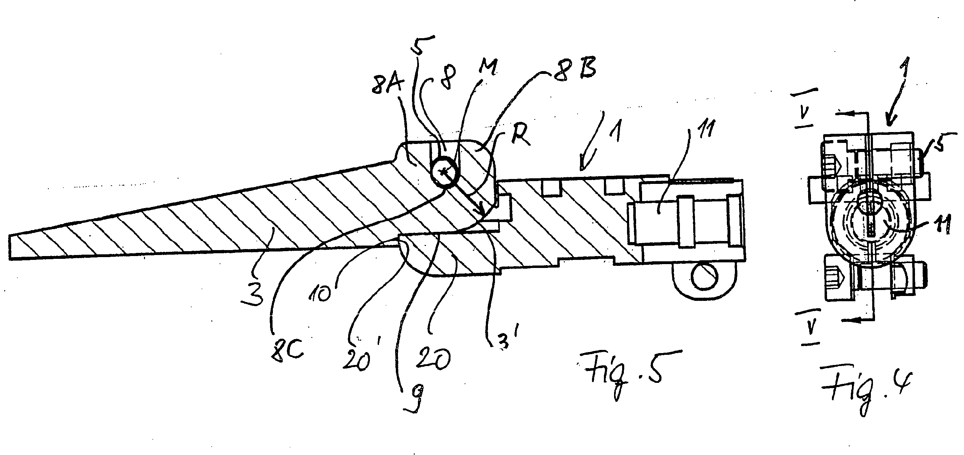

Die Sägeblatthalterung 1 weist an ihrem hinteren Ende (rechts oben in Figur 1 und 3, vgl. auch Figur 5) eine Ausnehmung 11 auf, mit der sie auf ein Antriebsglied, z.B. einen Wellenstumpf 30, aufgeschoben und dort mittels einer Schraube 12 festgeklemmt wird (vgl. Fig. 3). Das Antriebsglied 30 ist Teil eines in der Hand zu haltenden Werkzeugs und wird durch eine in dem Werkzeug vorgesehene Antriebseinrichtung motorisch (z.B. pneumatisch) derart angetrieben, dass es eine oszillierende Hubbewegung in Richtung des eingezeichneten Doppelpfeils P ausführt (vgl. z.B. die eingangs genannte DE 198 50 689). Die Sägeblatthalterung 1 wird im Gehäuse des Werkzeugs mittels der Führungsrippen 16, 17 (Figur 3) geführt.

Fig. 2 zeigt, dass sich an eine mit Sägezähnen 22 versehene Sägekante 21 des Sägeblatts 3 ein Absatz 10 anschließt, an den sich wiederum eine Kante 23 anschließt. Im eingesetzten Zustand liegt die Kante 23 des Sägeblattes auf der in Fig. 1 referenzierten Anlegefläche 9 auf, die den Grund des Schlitzes 2 im vorderen Ende 20 der Sägeblatthalterung 1 bildet, während der Absatz 10 an der vorderen Fläche 20' des Endes 20 der Sägeblatthalterung 1 anliegt. Diese Auflage und Anlage legt das Sägeblatt 3 im Schlitz 2 in einer präzise definierten Position fest.

Das Sägeblatt 3 weist ferner einen quer zur Richtung der Hin- und Herbewegung des Sägeblatts 3 mit zwei Kanten 8' und 8" verlaufenden Einschnitt 8 auf, von denen die hintere Kante 8' im eingesetzten Zustand als Sicherungskante an der Schraube 5 anliegt und das Sägeblatt 3 im Falle einer Lockerung der Klemmung gegen ein Herausschießen oder Herausschleudern nach vorne (also nach links unten in Figur 1) sichert. Die beiden Schenkel 8A und 8B ergeben eine große Klemmfläche. Die Abmessungen sind so gewählt, dass - bei eingesetzter Schraube 5 - das Sägeblatt 3 nur in einem gegenüber der Richtung P der Hin- und Herbewegung verschwenktem Zustand (vgl. die beiden in Figur 2 strichpunktiert dargestellten Positionen) zwischen Schraube 5 und Anlegefläche 9 eingefädelt werden kann.

Die Figur 1 zeigt damit insbesondere eine Sägeblatthalterung 1 einer motorisch antreibbaren Säge, wobei die Sägeblatthalterung 1 dazu eingerichtet ist, eine oszillierende Hubbewegung auszuführen, und die dazu eingerichtet ist, das Sägeblatt 3 sowohl in Richtung P der oszillierenden Hubbewegung als auch quer dazu formschlüssig zu halten. Der quer zur Richtung P wirksame Formschluss ergibt sich durch die Wände des Schlitzes 2. Der in Richtung P der Hubbewegung wirkende Formschluss erfolgt durch die wenigstens eine Schraube 5, die quer zur Richtung P der Hubbewegung angeordnet ist und im Zusammenwirken mit wenigstens einer Kante 8', 8" des Sägeblatts 3 eine zur Hubbewegung parallele Relativbewegung zwischen Sägeblatt 3 und Sägeblatthalterung 1 sperrt.

Die Sägeblatthalterung 1 zeichnet sich dadurch aus, dass sie einen Schlitz 2 aufweist, der in einer zur Richtung P der Hubbewegung parallelen Richtung und in einer dazu und zur Anordnung der Schraube 5 quer liegenden Richtung offen ist. In der Darstellung der Fig. 1 ist der Schlitz 2 nach vorn, also in Richtung der Hubbewegung P, und nach oben und damit quer zur Richtung P der Hubbewegung offen. Durch diese Ausgestaltung erlaubt der Schlitz 2 ein quer zur Hubbewegung erfolgendes Einführen des Sägeblatts (3), wie es in der Fig. 2 dargestellt ist. Dort stellt die durchgezogen gezeichnete Stellung des Sägeblattes eine Arbeitsposition dar, in der das Sägeblatt 3 parallel zur Richtung P ausgerichtet ist, während die gestrichelten Darstellungen Zwischenstellungen repräsentieren, die das Sägeblatt beim quer zur Richtung P erfolgenden Einsetzen in die Sägeblatthalterung 1 oder Herausnehmen aus der Sägeblatthalterung 1 einnimmt.

Die Schraube 5 ist durch ihre Anordnung und ihren Durchmesser dazu eingerichtet, im Zusammenwirken mit einem quer zu der Sägekante 21 des Sägeblatts 3 verlaufenden Einschnitt 8 in dem Sägeblatt 3 ein Schwenkgelenk zu bilden, das ein um die Schraube 5 herum erfolgendes Verschwenken des Sägeblatts 3 erlaubt. Die Schwenkbewegung wird durch die verschiedenen Schwenkstellungen in der Fig. 2 repräsentiert.

Entsprechend ist das Sägeblatt 3 dazu eingerichtet, in der Sägeblatthalterung 1 sowohl in Richtung P der oszillierenden Hubbewegung als auch quer dazu formschlüssig gehalten zu werden, wobei der in Richtung P der Hubbewegung wirkende Formschluss durch die wenigstens eine Schraube 5 erfolgt, die quer zur Hubbewegung in der Sägeblatthalterung 1 angeordnet ist und die im Zusammenwirken mit wenigstens einer Kante 8', 8" des in der Sägeblatthalterung 1 liegenden Sägeblatts 3 eine zur Richtung P der Hubbewegung parallele Relativbewegung zwischen Sägeblatt 3 und Sägeblatthalterung 1 sperrt.

Das Sägeblatt zeichnet sich dadurch aus, dass die Kante 8', 8 " einen quer zu der Sägekante 21 des Sägeblatts 3 verlaufenden Einschnitt 8 im Sägeblatt 3 begrenzt, der durch seine Anordnung und Abmessungen dazu eingerichtet ist, im Zusammenwirken mit der Schraube 5 ein Schwenkgelenk zu bilden, das ein um die Schraube 5 herum erfolgendes Verschwenken des Sägeblatts 3 erlaubt.

Die Sägeblatthalterung 1 und das Sägeblatt 3 stellen damit miteinander in Beziehung stehende Erzeugnisse dar, deren Abmessungen aneinander angepasst sind, ähnlich wie es bei einer Paarung aus einem Stecker und einer Steckdose der Fall ist.

In einer bevorzugten Ausgestaltung ist die Sägeblatthalterung 1 dazu eingerichtet, ein um die Schraube 5 herum erfolgendes Verschwenken des Sägeblatts 3 in die Arbeitsposition zu erlauben, in der die Sägekante 21 parallel zur Richtung P der oszillierenden Hubbewegung ausgerichtet ist.

Die Schraube 5 stellt eine Ausgestaltung eines Bolzens dar, der im Zusammenwirken mit einem entsprechend gestalteten Sägeblatt ein Schwenkgelenk bildet. Bei dieser Ausgestaltung ist die Mutter 6 dazu eingerichtet, mit der in die Sägeblatthalterung 1 eingesteckten Schraube 5 verschraubt zu werden und im angezogenen Zustand der resultierenden Schraubverbindung das Sägeblatt 3 in der Sägeblatthalterung 2 zu klemmen und/oder die Schraube 5 gegen ein Herausfallen aus der Sägeblatthalterung 1 zu sichern.

Eine alternativ bevorzugte Ausgestaltung sieht vor, dass der Bolzen ein gewindeloser Bolzen ist. Bei dieser Ausgestaltung ist ferner bevorzugt,dass der Bolzen an einem Ende einen Kopf aufweist, der in radialer Richtung über den Bolzen hinaus ragt und dass das gegenüberliegende Ende des Bolzens dazu eingerichtet ist, einen Sicherungsring oder einen Sicherungsstift aufzunehmen, der den Bolzen gegen ein Herausfallen aus der Sägeblatthalterung 1 sichert. Die Aufnahme des Bolzens in der Sägeblatthalterung 1 ist ferner so dimensioniert, dass ihr Durchmesser größer als der Durchmesser des Bolzens aber kleiner als der Durchmesser des Kopfes des Bolzens ist. Bevorzugt ist auch, dass der Bolzen und/oder der Sicherungsring oder Sicherungsstift eine Schräge aufweist, die so angeordnet ist, dass sie bei einem radial erfolgenden Einsetzen des Sicherungsrings oder des Sicherungsstifts in das zugehörige Ende des Bolzen eine Axialkraftkomponente erzeugt, mit der das Sägeblatt in der Sägeblatthalterung 1 geklemmt wird.

Die Sägeblatthalterung 1 aufweist einen Anschlag, der ein über die Arbeitsposition hinausgehendes Verschwenken des Sägeblatts 3 verhindert. Der Anschlag ergibt sich in einer Ausgestaltung dadurch, dass die Kante 23 des Sägeblattes 3 im eingesetzten Zustand auf der in Fig. 1 referenzierten Anlegefläche 9 aufliegt, während der Absatz 10 an der vorderen Fläche 20' des Endes 20 der Sägeblatthalterung 1 anliegt.

Eine Ausgestaltung des Sägeblatts 3 zeichnet sich dadurch aus, dass der Einschnitt 8 durch eine halbkreisförmige Rundung 8C begrenzt ist, die in der Arbeitsposition des Sägeblatts 3 an der Schraube 5 anliegt und dass ein Sägeblatthalterung-seitiges Ende 3' des Sägeblatts 3 eine konzentrisch zur halbkreisförmigen Rundung 8C des Einschnitts 8 verlaufende Rundung aufweist, deren Radius R gleich dem in der Arbeitsposition des Sägeblatts 3 herrschenden Abstand des Mittelpunktes M des durch die Rundung 8C des Einschnittes 8 definierten Halbkreises von der Anlegefläche (9) ist.

Bevorzugt ist auch, dass den Einschnitt 8 begrenzende Kanten 8', 8" senkrecht zur Sägekante 21 und damit bei in die Arbeitsposition innerhalb der Sägeblatthalterung 1 geschwenktem Sägeblatt auch senkrecht zur Richtung P der oszillierenden Hubbewegung verlaufen.

Eine weitere bevorzugte Ausgestaltung des Sägeblatts zeichnet sich dadurch aus, dass der Einschnitt 8 zwei parallel verlaufende Kanten 8', 8" und eine halbkreisförmige Rundung 8C zur Anlage an der Schraube 5 aufweist und dass ein Sägeblatthalterung-seitiges Ende 3' des Sägeblatts 3 eine konzentrisch zur halbkreisförmigen Rundung 8C verlaufende Rundung aufweist, deren Radius R gleich dem Abstand des Mittelpunktes M der Rundung 8C des Einschnitts 8 von einer Unterkante 23 des Sägeblattes 3 ist.

In einer bevorzugten Ausgestaltung ist der Radius R so bemessen, dass die Unterkante 23 im montierten Zustand möglichst noch mit einer gewissen Spannung an der Oberkante der Anlegefläche 9 am Grund des Schlitzes 2 anliegt (siehe Figur 5).

Das Einfädeln des Sägeblattes 3 in den Schlitz 2 bei eingesetzter Schraube 5 erfolgt durch Verschwenken des Sägeblattes 3 gemäß Figur 2 (vgl. die strichpunktiert eingezeichneten Zwischenstellungen), ist jedoch nur möglich, wenn auch das vordere Ende 3' des Sägeblattes 3 mit diesem Radius R gerundet ist.

Der Absatz 10 der Unterkante 23 des Sägeblattes 3 liegt im eingesetzten Zustand an der Vorderfläche 20' des vorderen Endes 20 der Sägeblatthalterung 1 an und bildet damit einen Anschlag, der eine Arbeitsposition des Sägeblatts 3 in der Sägeblatthalterung 1 definiert.

Mit 25 sind Haftsicken am Sägeblatt 3 bezeichnet, die einen leicht gespannten Sitz des Sägeblattes 3 im Schlitz bewirken.

## Patentansprüche

1. Motorisch antreibbare Säge mit einer Sägeblatthalterung (1), die dazu eingerichtet ist, eine oszillierende Hubbewegung auszuführen, und die dazu eingerichtet ist, ein Sägeblatt (3) sowohl in Richtung (P) der oszillierenden Hubbewegung als auch quer dazu formschlüssig zu halten, wobei der in Richtung (P) der Hubbewegung wirkende Formschluss durch wenigstens einen Bolzen erfolgt, der quer zur Hubbewegung angeordnet ist und der im Zusammenwirken mit wenigstens einer Kante (8', 8") des Sägeblatts (3) eine zur Hubbewegung parallele Relativbewegung zwischen Sägeblatt (3) und Sägeblatthalterung (1) sperrt, und wobei der Bolzen durch seine Anordnung und seinen Durchmesser dazu eingerichtet ist, im Zusammenwirken mit einem quer zu einer Sägekante (21) des Sägeblatts (3) verlaufenden Einschnitt (8) in dem Sägeblatt (3) ein Schwenkgelenk zu bilden, das ein um den Bolzen herum erfolgendes Verschwenken des Sägeblatts (3) erlaubt, wobei die Sägeblatthalterung (1) einen Schlitz (2) aufweist, der in einer zur Hubbewegung parallelen Richtung und in einer dazu und zur Anordnung des Bolzens quer liegenden Richtung offen ist und ein Einfädeln des Sägeblatts in den mit dem Bolzen versehenen Schlitz nur in einem gegenüber der Arbeitshubbewegung verschwenkten Zustand des Sägeblatts erlaubt, **dadurch gekennzeichnet, dass** der Schlitz (2) ein vorderes Ende (20) der Sägeblatthalterung (1) in zwei Hälften teilt, die Öffnungen (4) aufweisen, die dazu eingerichtet sind, den Bolzen aufzunehmen, und
- wobei der Schlitz (2) eine Anlegefläche (9) aufweist, die den Grund des Schlitzes bildet und einen Anschlag bildet, der ein über die Arbeitsposition hinausgehendes Verschwenken des Sägeblatts 3 verhindert, und
- wobei der Bolzen eine Schraube (5) ist, deren Ende mit einem Außengewinde versehen ist, das mit einer Schraubenmutter (6) so zusammenwirkt, dass beim Anziehen der Schraube 5 die beiden Hälften des vorderen Endes (20) der Sägeblatthalterung (1) so zusammengezogen werden, dass ein in den Schlitz (2) eingesetztes hinteres Ende des Sägeblattes (3) dazwischen großflächig festgeklemmt wird, oder dass der Bolzen ein gewindeloser Bolzen ist, der an einem Ende einen Kopf aufweist, der in radialer Richtung über den Bolzen hinaus ragt und dass das gegenüberliegende Ende des Bolzens dazu eingerichtet ist, einen Sicherungsring oder einen Sicherungsstift aufzunehmen, der den Bolzen gegen ein Herausfallen aus der Sägeblatthalterung (1) sichert, wobei der Bolzen und/oder der Sicherungsring oder Sicherungsstift eine Schräge aufweist, die so angeordnet ist, dass sie bei einem radial erfolgenden Einsetzen des Sicherungsrings oder des Sicherungsstifts in das zugehörige Ende des Bolzen eine Axialkraftkomponente erzeugt, mit der das Sägeblatt in der Sägeblatthalterung (1) geklemmt wird.

2. Säge nach Anspruch 1, **dadurch gekennzeichnet, dass** die Sägeblatthalterung (1) dazu eingerichtet ist, ein um den Bolzen herum erfolgendes Verschwenken des Sägeblatts (3) in eine Arbeitsposition zu erlauben, in der die Sägekante (21) parallel zur Richtung (P) der oszillierenden Hubbewegung ausgerichtet ist.

3. Säge nach Anspruch 2, **gekennzeichnet durch** eine Mutter (6), die dazu eingerichtet ist, mit der in die Sägeblatthalterung (1) eingesteckten Schraube (5) verschraubt zu werden und im angezogenen Zustand der resultierenden Schraubverbindung das Sägeblatt (3) in der Sägeblatthalterung (1) zu klemmen und/oder die Schraube (5) gegen ein Herausfallen aus der Sägeblatthalterung (1) zu sichern.

4. Säge mit einem Sägeblatt, wobei die Säge die Merkmale des Oberbegriffs des Anspruchs 1 aufweist, und wobei das Sägeblatt eine Kante (8', 8") aufweist, die eine zur Richtung (P) der Hubbewegung parallele Relativbewegung zwischen Sägeblatt (3) und Sägeblatthalterung (1) des in der Sägeblatthalterung (1) liegenden Sägeblatts (3) sperrt, und die einen quer zu einer Sägekante (21) des Sägeblatts (3) verlaufenden Einschnitt (8) im Sägeblatt (3) begrenzt, der durch seine Anordnung und Abmessungen dazu eingerichtet ist, im Zusammenwirken mit dem Bolzen ein Schwenkgelenk zu bilden, das ein um den Bolzen herum erfolgendes Verschwenken des Sägeblatts (3) erlaubt, **dadurch gekennzeichnet, dass** die Säge die Merkmale des kennzeichnenden Teils des Anspruchs 1 aufweist und dass das der Einschnitt des Sägeblatts (3) durch eine halbkreisförmige Rundung (8C) begrenzt ist, die in der Arbeitsposition des Sägeblatts (3) an dem Bolzen anliegt und dass ein Sägeblatthalterung-seitiges Ende (3') des Sägeblatts (3) eine konzentrisch zur halbkreisförmigen Rundung (8C) des Einschnitts (8) verlaufende Rundung aufweist, deren Radius (R) gleich dem in der Arbeitsposition des Sägeblatts (3) herrschenden Abstand des Mittelpunktes (M) des durch die Rundung (8C) des Einschnittes (8) definierten Halbkreises von der am Grund des Schlitzes (2) gegebenen Anlegefläche (9) ist.

5. Sägeblatt (3) nach Anspruch 4, **dadurch gekennzeichnet, dass** den Einschnitt (8) begrenzende Kanten (8', 8") senkrecht zur Richtung (P) der oszillierenden Hubbewegung verlaufen.

6. Sägeblatt (3) nach einem der Ansprüche 4 oder 5, **dadurch gekennzeichnet, dass** eine Unterkante (23) des Sägeblatts (3) zur Anlage an der Vorderfläche (20') einer Sägeblatthalterung (1) einen Absatz (10) aufweist.

7. Sägeblatt (3) nach einem der Ansprüche 4 bis 6 **dadurch gekennzeichnet, dass** das Sägeblatt (3) beidseitig des Einschnitts (8) Andrucksicken (25) aufweist.

## Claims

1. A motor driven saw having a saw blade holder (1) which is arranged for executing an oscillating reciprocating motion and which is arranged for holding a saw blade (3) in formlocking fashion both in the direction of the oscillating reciprocating motion and transversely thereto, in which the form lock acting in the direction (P) of the reciprocating motion is effected by means of at least one bolt which is disposed transversely to the reciprocating motion and which in cooperation with at least one edge (8', 8") of the saw blade (3) blocks a relative motion, parallel to the reciprocating motion, between the saw blade (3) and the saw blade holder (1), and the bolt, by means of its disposition and its diameter and in cooperation with a notch (8) in the saw blade (3) extending transversely to a sawing edge (21) of the saw blade (3), is arranged for forming a swivel joint which permits swiveling of the saw blade (3) about the bolt, and the saw blade holder (1) has a slot (2) which is open in a direction parallel to the reciprocating motion and in a direction located transversely to the disposition of the bolt and permits the saw blade to be threaded into the slot provided with the bolt only in a state of the saw blade in which the saw blade is swiveled relative to the working reciprocating motion, **characterized in that** the slot (2) divides a front end (20) of the saw blade holder (1) into two halves, which have openings (4) that are arranged for receiving the bolt; and
- the slot (2) has a contact face (9) that forms the bottom of the slot and forms a stop, which prevents the saw blade (3) from swiveling past the working position; and
- the bolt is a screw (5), the end of which is provided with a male thread that cooperates with a screw nut (6) such that upon tightening of the screw (5), the two halves of the front end (20) of the saw blade holder (1) are pulled together such that a back end of the saw blade (3) that is inserted into the slot (2) is firmly clamped in between over a large area, or that the bold is a threadless bolt, which has a head on one end that protrudes radially past the bolt, and that the opposite end of the bolt is arranged for receiving a securing ring or securing pin that secures the bolt against falling out of the saw blade holder (1), the bolt and/or the securing ring or securing pin having a bevel which is disposed such that when the securing ring or securing pin is inserted radially into the associated end of the bolt, the bevel generates an axial component with which the saw blade is clamped in the saw blade holder (1).

2. The saw of claim 1, **characterized in that** the saw blade holder (1) is arranged for permitting swiveling of the saw blade (3) about the bolt into a working position in which the sawing edge (21) is oriented parallel to the direction (P) of the oscillating reciprocating motion.

3. The saw of claim 2, **characterized by** a nut (6), which is arranged for being screwed to the screw (5) inserted into the saw blade holder (1) and in the tightened state of the resultant screw connection for clamping the saw blade (3) in the saw blade holder (1) and/or for securing the screw (5) against falling out of the saw blade holder (1).

4. A saw having a sawblade, the saw having the features of the preamble to claim 1, and the saw blade having an edge (8', 8") which blocks a relative motion, parallel to the direction (P) of the reciprocating motion, between the saw blade (3), located in the saw blade holder (1), and the saw blade holder (1), and which defines a notch (8) in the saw blade (3), which notch extends transversely to a sawing edge (21) of the saw blade (3) and is arranged by its disposition and its dimensions, in cooperation with the bolt, for forming a swivel joint which permits swiveling of the saw blade (3) about the bolt, **characterized in that** the saw has the features of the body of claim 1; and that the notch in the saw blade (3) is defined by a semicircular rounded portion (8C) that in the working position of the saw blade (3) rests on the bolt; and that an end (3') of the saw blade (3) toward the saw blade holder has a rounded portion which extends concentrically to the semicircular rounded portion (8C) of the notch (8) and the radius (R) of which is equal to the spacing, prevailing in the working position of the saw blade (3), of the center point (M) of the semicircle, defined by the rounded portion (8C) of the notch (8), from the contact face (9) defined on the bottom of the slot (2).

5. The saw blade (3) of claim 4, **characterized in that** edges (8', 8") defining the notch (8) extend perpendicular to the direction (P) of the oscillating reciprocating motion.

6. The saw blade (3) of one of claims 4 or 5, **characterized in that** a lower edge (23) of the saw blade (3) has a shoulder (10) for contact with the front face (20') of a saw blade holder (1).

7. The saw blade (3) of one of claims 4-6, **characterized in that** the saw blade (3) has contact-pressure beads (25) on both sides of the notch (8).

## Revendications

1. Scie actionnable par moteur, comportant un porte-lame de scie (1) qui est conçu pour effectuer une course oscillante et qui est conçu pour supporter par accouplement mécanique une lame de scie (3) tant dans la direction (P) de la course oscillante que transversalement à ce mouvement, ledit accouplement mécanique, agissant dans la direction (P) de la course, étant obtenu par au moins un boulon, qui est disposé transversalement à la course et qui, en coopération avec au moins un bord (8', 8") de la lame de scie (3), bloque un mouvement relatif, parallèle à la course, entre la lame de scie (3) et le porte-lame de scie (1), et ledit boulon étant conçu, par sa disposition et son diamètre, pour former, en coopération avec une encoche (8) réalisée dans la lame de scie (3) et orientée transversalement à une arête (21) de la lame de scie (3), une articulation de pivotement qui autorise un pivotement de la lame de scie (3) autour du boulon, le porte-lame de scie (1) comportant une fente (2) qui est ouverte dans une direction parallèle à la course et dans une direction transversale à cette dernière et à la disposition du boulon et qui autorise un engagement de la lame de scie dans la fente munie du boulon uniquement lorsque la lame de scie est en position pivotée par rapport à la course de travail, **caractérisée en ce que** la fente (2) divise une extrémité avant (20) du porte-lame de scie (1) en deux moitiés qui comportent des ouvertures (4) qui sont conçues pour recevoir le boulon, et
- la fente (2) comportant une surface d'appui (9) qui forme le fond de la fente et forme une butée empêchant la lame de scie (3) de pivoter au-delà de la position de travail, et
- le boulon étant une vis (5) dont les extrémités sont munies d'un filetage extérieur qui coopère avec un écrou (6) de telle sorte que, au moment du serrage de la vis (5), les deux moitiés de l'extrémité avant (20) du porte-lame de scie (1) sont resserrées de telle sorte qu'une extrémité arrière de la lame de scie (3), engagée dans la fente (2), est serrée sur une grande surface entre lesdites moitiés, ou **en ce que** le boulon est un boulon non fileté, qui comporte à une extrémité une tête qui s'avance au-delà du boulon dans le sens radial, et **en ce que** l'extrémité opposée du boulon est conçue pour recevoir une bague de sécurité ou une goupille de sécurité qui empêche le boulon de tomber hors du porte-lame de scie (1), le boulon et/ou la bague de sécurité ou goupille de sécurité comportent un chanfrein qui est disposé de telle sorte que, lorsque la bague de sécurité ou la goupille de sécurité est engagée radialement, il génère dans l'extrémité correspondante du boulon une composante de force axiale, par laquelle la lame de scie est serrée dans le porte-lame de scie (1).

2. Scie selon la revendication 1, **caractérisée en ce que** le porte-lame de scie (1) est conçu pour permettre un pivotement de la lame de scie (3) autour du boulon vers une position de travail, dans laquelle l'arête (21) de la scie est orientée parallèlement à la direction (P) de la course oscillante.

3. Scie selon la revendication 2, **caractérisée par** un écrou (6) qui est conçu pour être vissé sur la vis (5) insérée dans le porte-lame de scie (1) et pour serrer la lame de scie (3) dans le porte-lame de scie (1) lorsque l'assemblage vissé résultant est en position serrée et/ou pour empêcher que la vis (5) tombe hors du porte-lame de scie (1).

4. Scie comportant une lame de scie, ladite scie comportant les caractéristiques du préambule de la revendication 1, et la lame de scie comportant un bord (8', 8") qui bloque un mouvement relatif, parallèle à la direction (P) de la course, entre la lame de scie (3) et le porte-lame de scie (1) de la lame de scie (3) disposée dans le porte-lame de scie (1) et qui délimite une encoche (8), orientée transversalement à une arête (21) de la lame de scie (3) et réalisée dans la lame de scie (3), laquelle encoche, par sa disposition et ses dimensions, est conçue pour former, en coopération avec le boulon, une articulation de pivotement qui autorise un pivotement de la lame de scie (3) autour du boulon, **caractérisée en ce que** la scie comporte les caractéristiques de la partie caractérisante de la revendication 1 et **en ce que** l'encoche de la lame de scie (3) est délimitée par un arrondi (8C) semi-circulaire qui, dans la position de travail de la lame de scie (3), est en appui contre le boulon, et **en ce que** l'extrémité (3') de la lame de scie (3), du côté porte-lame de scie, comporte un arrondi, qui est concentrique à l'arrondi (8C) semi-circulaire de l'encoche (8) et dont le rayon (R) est égal à la distance, existant dans la position de travail de la lame de scie (3), entre le centre (M) du demi-cercle défini par l'arrondi (8C) de l'encoche (8) et la surface d'appui (9) définie sur le fond de la fente (2).

5. Lame de scie (3) selon la revendication 4, **caractérisée en ce que** des bords (8', 8"), délimitant l'encoche (8), s'étendent perpendiculairement à la direction (P) de la course.

6. Lame de scie (3) selon la revendication 4 ou 5, **caractérisée en ce qu'**une arête inférieure (23) de la lame de scie (3) comporte un talon (10) pour un appui contre la surface avant (20') d'un porte-lame de scie (1).

7. Lame de scie (3) selon l'une quelconque des revendications 4 à 6, **caractérisée en ce que** la lame de scie (3) comporte des moulures de pression (25) de part et d'autre de l'encoche (8).
